Europäisches Patentamt

(19) European Patent Office

Office européen des brevets

(11) Publication number: 0 330 291 B1

## EUROPEAN PATENT SPECIFICATION

(45) Date of publication of patent specification:
28.08.91 Bulletin 91/35

(51) Int. Cl.⁵: **E03D 9/08, G05B 19/40**

(21) Application number: 89200604.0

(22) Date of filing: 04.06.85

(54) A method of controlling the position of a slidable body.

(30) Priority: 23.03.85 JP 41817/84 U
31.03.85 JP 67885/84
31.03.85 JP 67886/84

(43) Date of publication of application:
30.08.89 Bulletin 89/35

(60) Publication number of the earlier application in accordance with Art. 76 EPC: 0 195 842

(45) Publication of the grant of the patent:
28.08.91 Bulletin 91/35

(84) Designated Contracting States:
DE FR GB IT NL

(56) References cited:
EP-A- 0 074 883
DE-A- 3 411 497
US-A- 4 438 662

(73) Proprietor: TOTO LTD.
No. 1-1, Nakashima 2-chome Kokurakita-ku
Kitakyushu-shi Fukuoka-ken (JP)

(72) Inventor: Kurosawa, Masahiro
c/o Koito Industries, Ltd. 100, Maeda-cho
Totsuka-ku Yokohama-shi Kanagawa-ken (JP)

Inventor: Niki, Shigeru
c/o Koito Industries, Ltd. 100, Maeda-cho
Totsuka-ku Yokohama-shi Kanagawa-ken (JP)
Inventor: Kadomatsu, Shigenari
c/o Koito Industries, Ltd. 100, Maeda-cho
Totsuka-ku Yokohama-shi Kanagawa-ken (JP)
Inventor: Moroi, Motoki
c/o Koito Industries, Ltd. 100, Maeda-cho
Totsuka-ku Yokohama-shi Kanagawa-ken (JP)
Inventor: Yuasa, Takao
c/o Koito Industries, Ltd. 100, Maeda-cho
Totsuka-ku Yokohama-shi Kanagawa-ken (JP)
Inventor: Iida, Masami
c/o Toto Ltd. Chigasaki Plant, 8-1 Honson
2-chome
Chigasaki-shi Kanagawa-ken (JP)
Inventor: Katamune, Tetsuhiro c/o Toto Ltd.
Kokura Plant 2
1001, Ooaza Kusami Kokuraminami-ku
Kitakyushu-shi Fukuoka-ken (JP)
Inventor: Seki, Akiyoshi c/o Toto Ltd. Kokura
Plant 2
1001, Ooaza Kusami Kokuraminami-ku
Kitakyushu-shi Fukuoka-ken (JP)
Inventor: Ide, Kazutaka c/o Toto Ltd. Kokura
Plant 2
1001, Ooaza Kusami Kokuraminami-ku
Kitakyushu-shi Fukuoka-ken (JP)

(74) Representative: Deufel, Paul, Dr. et al
Patentanwälte Deufel, Hertel, Lewald
Isartorplatz 6 Postfach 2602 47
W-8000 München 26 (DE)

## Description

This invention relates to a method of controlling the position of a slidable body. More particularly, it is concerned with a device for moving a nozzle in a part cleaning device for washing the anus and functioning as a bidet and a method of controlling the position of the nozzle. The term "part cleaning device" as herein used means an apparatus including a tank for cleaning water, a cleaning nozzle which is movable between its retracted position and its cleaning position, a system for heating the cleaning water, a system for supplying the heated cleaning water, a system for moving the nozzle and devices for controlling those systems, and provided at the rear end of a water closet for directing a jet of heated cleaning water toward the private parts through the nozzle in its cleaning position.

In a part cleaning device, it is usually case that the nozzle has two cleaning positions, i.e., the position for cleaning the anus and the position for functioning as a bidet.

There are known two arrangements for moving the nozzle forward from its retracted position to its cleaning positions and backward.

One of them relies on the pressure of cleaning water for moving the nozzle forward. The nozzle is slidably disposed in a cylinder and the cleaning water is introduced into the cylinder to push the nozzle out of the cylinder to either of its cleaning positions. A spring is connected to the nozzle for urging the nozzle back to its retracted position in the cylinder.

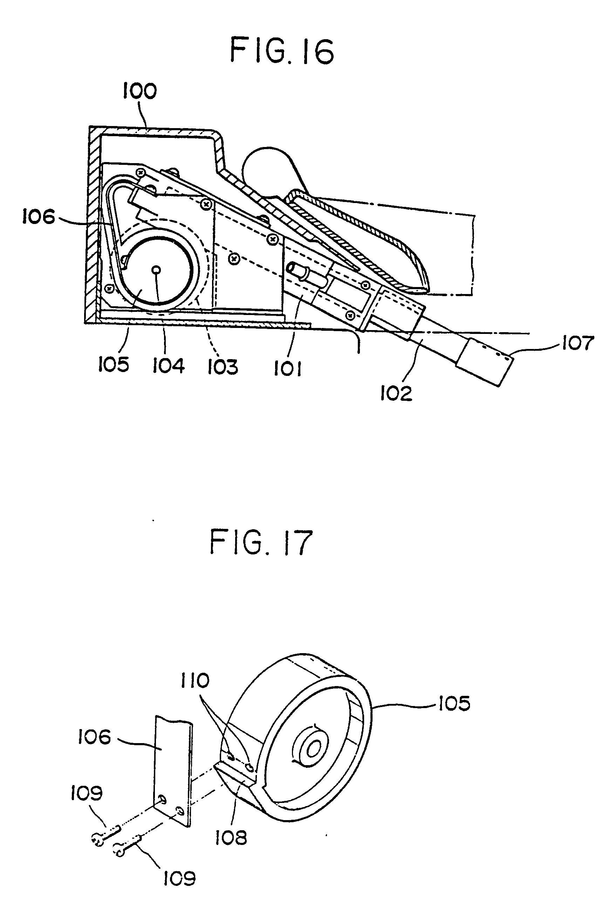

The other arrangement employs a motor which is rotatable in either direction for moving the nozzle out of, or into, a cylinder. This arrangement will hereunder be described with reference to FIGURE 16.

The cylinder 101 is secured in a casing 100 located adjacent to the rear end of a toilet stool (not shown). The nozzle 102, which comprises a tubular body, is axially slidable in the cylinder 101. The electric motor 103 is provided adjacent to the proximal end of the cylinder 101 for moving the nozzle 102 forward or backward. The motor 103 has an output shaft 104 to which a cylindrical drum 105 is secured. A leaf spring 105 has one end wound on, and fastened to, the outer cylindrical surface of the drum 105. The other end of the spring 106 is connected to the proximal end of the nozzle 102. The output shaft 104 of the motor 103 is rotatable in two directions and the manner of the rotations of the output shaft 104 causes the reciprocal motion of the nozzle 102 in the cylinder 101. When the nozzle 102 is brought to its cleaning position, it directs a jet of cleaning water toward the private parts of a person using the toilet through its end openings 107. The positioning of the conventional nozzle 102 structure is effected by a feedback control system including a sensor of, for example, the magnetic or optical type which is located in a position for monitoring the motion of the nozzle 102. The sensor detects the amount of motion of the nozzle 102 and transmits a corresponding signal to the motor 103 to turn the power circuit of the motor 103 on or off.

The system relying on the pressure of the cleaning water for positioning the nozzle has the disadvantage that if the water pressure is lower than a predetermined level, the nozzle fails to reach its designated cleaning position and accomplish its proper cleaning function. If the nozzle is of the type having two cleaning positions for the anus and for the use as a bidet, respectively, its internal water passages formed in the nozzle 102 itself are complicated and the size of the nozzle 102 is undesirably enlarged.

The system employing the motor 103 for moving the nozzle 102 and the sensor for detecting and positioning it has the disadvantage that its nozzle positioning accuracy depends on the performance of the sensor. If the sensor fails to function accurately, the nozzle 102 fails to reach its designated cleaning position and also to accomplish its proper cleaning operation as mentioned above.

The sensor requires a complicated job of assembly including wiring connection between the motor 103 and the control system and mounting in a predetermined narrow space, and the control system also becomes complicated. The drum 105 has, as shown in FIGURE 17, formed on its outer cylindrical surface a shoulder 108 and threaded holes 110 provided in the vicinity of the shoulder 108 for receiving screws 109 for securing the leaf spring 106. Thus, the outer cylindrical surface of the drum 105 on which the leaf spring 106 is wound does not have a uniform curvature. As the drum 105 is rotated alternately in the opposite directions, the leaf spring 106 is wound on the surface of the drum 105 and unwound therefrom repeatedly. Insofar as the surface of the drum 105 does not have a uniform curvature, with the passage of time the fatigue of the leaf spring 106 is not uniform along its length, and this causes stress concentration or buckling in the leaf spring 106 which leads to failure in driving the nozzle 102. The fastening of the leaf spring 106 to the drum 105 by the screws 109 adds to the amount of labor required for the fabrication of the apparatus and hence the cost thereof.

Another problem that the conventional part cleaning device involves is due to the fact that the distal end portion of the nozzle 102 which is provided with the opening 107 projects from the cylinder 101 even when the nozzle 102 is in its retracted position. The projecting distal end portion of the nozzle 102 is always liable to contamination by dirty liquid or matter, whether the nozzle 102 may be in its cleaning or retracted position. The dirty liquid and matter are likely to form powder on the projecting end portion of the nozzle 102 and in its openings 107 and thereby to block the openings 107. They have an objectionable odor, and contaminate cleaning water.

It is an object of this invention to solve the problems hereinabove pointed out in connection with the movement of a slidable body and more particularly the positioning of a cleaning nozzle in a part cleaning device, and to improve the accuracy of the nozzle positioning by employing an open-loop control system not relying on any kind of sensors.

The object of this invention is attained by a device for driving a slidable nozzle in a part cleaning device which comprises an electric motor adapted for rotation synchronously with the frequency of a power source of a pulse, such as a synchronous motor, pulse motor or servomotor, means for counting the number of cycles of the frequency of the power source for the motor, means for determining the actual position of the nozzle based on the counted number of cycles, and means for comparing the actual position of the nozzle with its predetermined cleaning or retracted position, the output of the comparing means being transmitted to a power circuit for the motor to effect the ON-OFF control thereof for moving the nozzle to its cleaning or retracted position.

The output shaft of the motor has a specific rotating speed or angle relative to the frequency of its power source. Therefore, the nozzle has a specific amount of axial direction movement in either direction depending on the direction of the rotation of the output shaft of the motor. It is, therefore, possible to determine the actual position of the nozzle if the number of cycles of the frequency of the power source is counted simultaneously with the rotation of the output shaft of the motor. The actual position of the nozzle is compared with its predetermined cleaning or retracted position stored in the comparing means, and so soon as the former coincides with the latter, the power circuit for the motor is turned off so that the nozzle may be stopped in its predetermined cleaning or retracted position.

Switches for starting the cleaning operation of the anus and the function as a bidet are provided in a control panel for a part cleaning device. If either of those switches is turned on, the nozzle is temporarily stopped in a position suitable for the self-cleaning of the nozzle head. The electromagnetic valve or pump disposed in the cleaning water feed line works for a brief period of time to supply water from a hot water storage tank to the annular passage so that it may clean the nozzle head and the distal end of portion the cylinder before it is discharged into a toilet stool. Then, if the stop switch provided in the control panel is turned on, the nozzle starts retracting into the cylinder and stops temporarily at its self-cleaning position on its way again. The electromagnetic valve or pump works briefly and water is supplied from the hot water storage tank to the annular passage for cleaning the nozzle head itself and the distal end portion of the cylinder before the nozzle is moved to its completely retracted position in the cylinder.

FIGURE 1 is a perspective view of a water closet provided with a part cleaning device embodying this invention ;

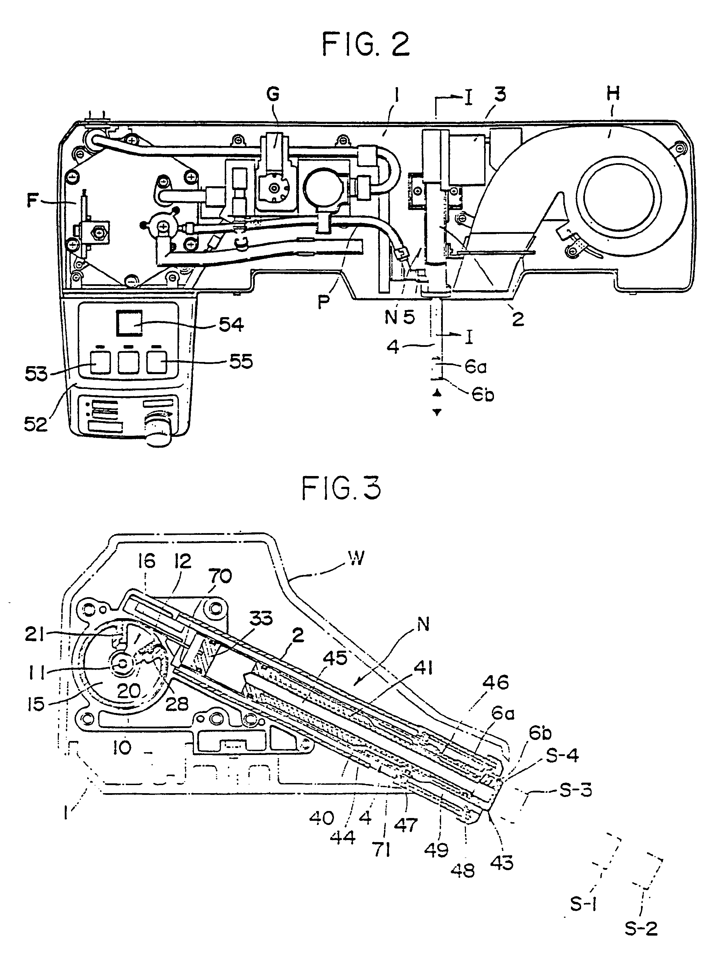

FIGURE 2 is a schematic top plan view showing the interior of the device shown in FIGURE 1 ;
FIGURE 3 is a sectional view taken along the line I-I of FIGURE 2 and showing the longitudinal section of a nozzle device in a retracted position ;
FIGURE 4 is a top plan view, partly in section, of the nozzle device ;
FIGURE 5 is an exploded perspective view of a drum and a leaf spring ;
FIGURE 6 is a perspective view showing the proximal end of the leaf spring secured to the drum ;
FIGURE 7 is a fragmentary longitudinal sectional view of the nozzle in its self-cleaning position ;
FIGURE 8 is a perspective view showing a nozzle distal end and a first and a second packing members ;
FIGURE 9 is a block diagram showing a control circuit for an electric motor ;
FIGURE 10 is a flow chart showing the operation of the motor ;
FIGURE 11 is a top plan view, partly in section, of the nozzle device of which the positioning is effected by lead switches and a magnet ;
FIGURE 12 is a sectional view taken along the line II-II of FIGURE 11 ;
FIGURE 13 is a longitudinal sectional view of the nozzle device of which the positioning is effected by Hall ICs and a magnet ;
FIGURE 14 is a top plan view, partly in section, of the nozzle device shown in FIGURE 13 ;
FIGURE 15 shows the principle of nozzle position detection by a magnet and Hall ICs ;
FIGURE 16 is a longitudinal sectional view of a conventional nozzle device ; and
FIGURE 17 is a perspective view of a conventional drum for driving the nozzle.

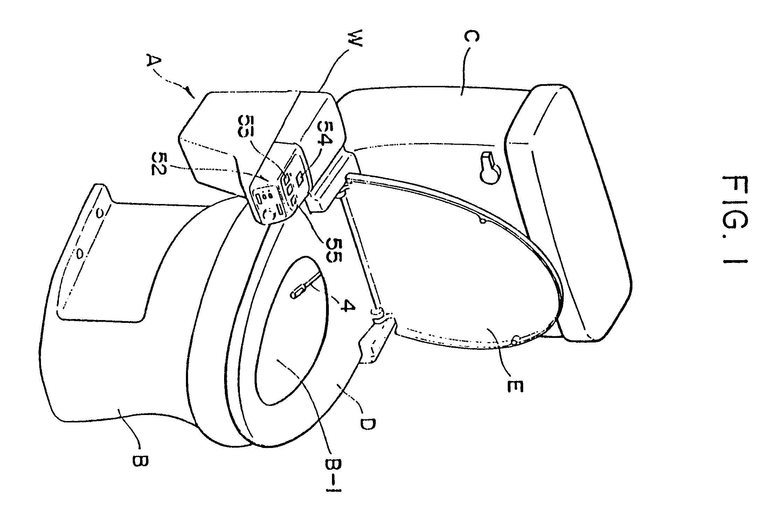

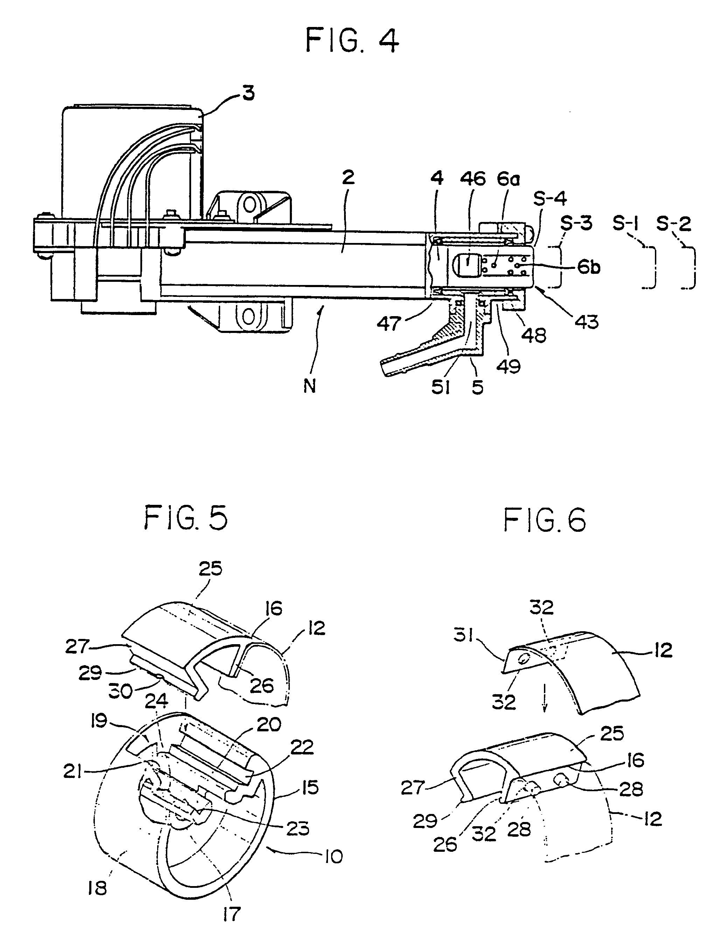

A water closet provided with a part cleaning device A embodying this invention is shown in FIGURE 1 and comprises a toilet stool B, a flushing water tank C, a lavatory seat D and a lid E. The part cleaning device A comprises a base 1, a tank F for heating and storing cleaning water, a valve unit G for supplying the cleaning water, a hot air fan H for drying after cleaning and a nozzle device N located approximately in the center of the device and connected to the tank F by a cleaning water supply pipe P. The nozzle device N comprises a cylinder 2 secured on the base 1 and having a base end to which an electric motor 3 is integrally mounted, and a tubular nozzle body 4 provided axially movably in the cylinder 2, as shown in FIGURES 3 and 4. The motor 3 is a synchronous motor having an output shaft adapted for rotation synchronously with the frequency of a power source.

The cylinder 2 is provided at the distal end thereof with an elbow 5 for connection to the cleaning water supply pipe P. When the nozzle body 4 has been moved forward to its cleaning position, the elbow 5 communicates with a water passage formed in the nozzle body 4 so that a jet of cleaning water may be directed outwardly through a plurality of first and second end openings 6a and 6b.

A cylindrical drum 10 is secured to the output shaft 11 of the motor 3. A thin leaf spring 12 has its proximal end fastened to the drum 10 and the distal end of the leaf spring 12 is connected to the proximal end portion of the nozzle body 4. The drum 10 is formed from a synthetic resin. It comprises a main body portion 15 and an insert portion 16 for securing the leaf spring 12 integrally to the main body portion 15, as shown in FIGURE 5. The main body portion 15 has a central boss 17 secured about the output shaft 11, and a major arc-shaped cylindrical outer peripheral or rim surface 18 formed with a sectoral recess 19. The recess 19 defines a pair of radial walls 20 and 21 which is substantially equal in length to the width of the rim surface 18. The wall 20 has a groove 22 and the wall 21 also has a groove 23. Both of the grooves 22 and 23 are in parallel to the axis of the drum 10. The groove 23 has a positioning projection 24 approximately at the middle thereof.

The insert portion 16 has a sectoral cross section and can be fitted in the sectoral recess 19. The insert portion 16 has an arcuate outer peripheral or rim surface 25 and a pair of radial walls 26 and 27. The rim surface 25 has a radius of curvature which is equal to that of the rim surface 18 of the main body portion 15, and the rim surfaces 18 and 25 form a precision cylindrical surface when the insert portion 16 is fitted in the main body portion 15. The wall 26 is formed on its outer surface with a pair of projections 28 for engaging the leaf spring 12, as shown in FIGURE 6. The wall 27 is provided at its radially inner edge with an outwardly directed flange 29 having approximately at the middle thereof a recess 30 in which the positioning projection 24 can be received.

The leaf spring 12 is so bent prior to assembly as to closely fit the wall 26 of the insert portion 16 and the rim surfaces 18 and 25, and has the bent end portion 31 formed with a pair of holes 32 for receiving the projections 28 on the wall 26, as shown in FIGURE 6. The projections 28 extending through the holes 32 are fitted in the groove 22 of the wall 20 and the flange 29 is fitted in the groove 23 of the wall 21, as is obvious from FIGURE 5. The other end of the leaf spring 12 is connected by a pin 33 to the proximal end portion of the nozzle body 4, as shown in FIGURE 3.

If the output shaft 11 of the motor 3 is rotated in one direction, the leaf spring 12 is unwound from the rim surfaces 18 and 25 of the drum 10 to enable the nozzle body 4 to move forward to its cleaning position, and if the output shaft 11 of the motor 3 is rotated in the reverse direction, the leaf spring 12 is wound on the drum to enable the nozzle body 4 to return to its retracted position. Insofar as the drum 10 has a precision cylindrical surface defined by the rim surfaces 18 and 25, the leaf spring 12 is subjected to uniform compression or tensile stress along its entire length when it is being either wound or unwound around the drum 10. The leaf spring 12 always works smoothly without being subjected to any localization of stress concentration or buckling, and therefore has long life and good durability. The leaf spring 12 is easy to be secured to the drum 10, as it is sufficient to fit the insert portion 16 in the main body portion 15.

The nozzle body 4 is of the double-walled construction and comprises an outer tube 40 and an inner tube 41 disposed in the outer tube 40 coaxially therewith. Therefore, the nozzle body 4 has a first water passage 44 defined between the outer and inner tubes 40 and 41, having an annular cross section and leading to a nozzle head 43 at the outer end of the outer tube 40, and a second water passage 45 extending through the inner tube 41 and leading to the nozzle head 43. The nozzle head 43 is provided at its top with three or five first jet openings 6a and second jet openings 6b, though the number of those openings may have to be selected to provide the force of water required for cleaning the anus or the function for a bidet. The nozzle head 43 is flattened on the top and the bottom by a pair of shoulders 46 dividing it from the rest of the nozzle body 4.

The cylinder 2 is provided inwardly of its outer distal end portion with a first packing member 47 and a second packing member 48 both having a Y-shaped cross section and surrounding the nozzle head 43 therebetween when the nozzle body 4 is in its complete retracted position. The packing members 47 and 48 and the shoulders 46 on the nozzle head 43 define an annular passage 49 in the cylinder 2. The annular passage 49 is connected to the passage 51 in the elbow 5 which is connected to the cleaning water supply pipe P leading to the tank F. The outer tube 40 has first and second water inlet opening (not shown) through which the annular passage 49 is connected to the first and second water passages 44 and 45 to supply cleaning water into the nozzle body 4 when it is in its cleaning position.

The nozzle device N including the nozzle body 4 is secured to the base 1 in a casing W in such a way that the nozzle body 4 may be axially movable into the bowl B-1 of the toilet stool B. The jetting of the cleaning water from the nozzle device N is started by a cleaning start switch 53 and a start switch for a bidet 55 provided on a control panel 52 and stopped by a stop switch 54 also provided on the control panel 52.

The nozzle body 4 can be stopped at three cleaning positions, i.e., the anus cleaning position S-1, the position for functioning as a bidet S-2 and self-cleaning position S-3. When the nozzle body 4 is in its first stop position S-1 by the operation of the cleaning start switch 53, cleaning water flows from the annular passage 49 to the first jet openings 6a through the first inlet opening (not shown) and the first water passage 44 for cleaning the anus. When the nozzle body 4 is in its second stop position S-2 by the operation of the start switch for a bidet 55, water flow from the annular passage 49 to the second jet openings 6b through the second inlet opening (not shown) and the second water passage 45 for the use as a bidet. The supply of cleaning water from the tank F may be effected by a known device, i.e., by an electromagnetic valve in the valve unit G if water is supplied directly, or by an electromagnetic pump (not shown) if it is supplied indirectly.

According to a salient feature of this invention, the electromagnetic valve or pump is in operation for a brief period of time immediately after the nozzle body 4 has been temporarily stopped at its self-cleaning position S-3, and immediately after it has been retracted toward the cylinder 2 and stopped temporarily at its self-cleaning position S-3 again. This is a very short period of, say, one to several seconds required for cleaning the nozzle head 43 and the adjacent end of the cylinder 2.

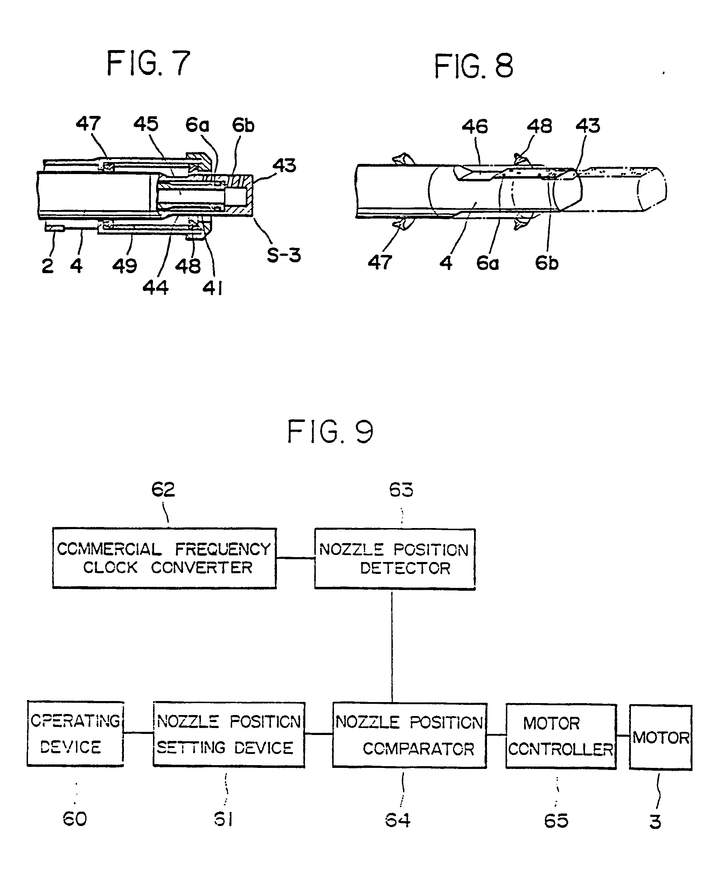

If the nozzle body 4 stops at its self-cleaning position S-3, the nozzle head 43 is displaced outwardly relative to the packing members 47 and 48 and projects from the cylinder 2, as shown in FIGURE 7. The second packing member 48 leaves the shoulders 46 on the nozzle head 43. The annular passage 49 communicates to the atmosphere through the annular opening between the second packing member 48 and the nozzle head 43 and water is discharged at a reduced pressure for cleaning the nozzle head 43 and the adjacent end of the cylinder 2 to keep them clean both before and after the toilet is used. As the pressure of the discharged water for self-cleaning is reduced, water flows along the nozzle head 43 and the adjacent end of the cylinder 2 slowly and does not undesirably jet out from the annular passage 49 into the bowl B-1 or splash out of the water closet B.

The nozzle body 4 does not necessarily need to be of the type having two water supply routes for cleaning the anus and for the use as a bidet, respectively, as hereinabove described. The first and second packing members 47 and 48 defining the annular passage 49 in the cylinder 2 do not necessarily need to have a Y-shaped cross section, but may have another cross sectional shape, for example, a U-shaped cross section.

A method of controlling the position of the nozzle body 4 will now be described with reference to FIGURE 9. The block diagram of FIGURE 9 includes a pushbutton or other operating device 60 provided in the vicinity of the part cleaning device, a nozzle position setting device 61 connected to the operating device 60, a commercial frequency clock converter 62 provided in the vicinity of the power source for the motor 3, a nozzle position detector 63 connected to the converter 62 and a nozzle position comparator 64 connected to the devices 62 and 63. The anus cleaning position S-1, the functioning position as a bidet S-2 and the self-cleaning position S-3 of the nozzle body 4 are stored in the nozzle position setting device 61 and each compared with the actual position of the nozzle body 4 which is detected by the nozzle position detector 63. The power circuit for the motor 3 is connected to the nozzle position comparator 64 through a motor controller 65 which turns on or off the supply of power to the motor 3 in response to the output of the comparator 64.

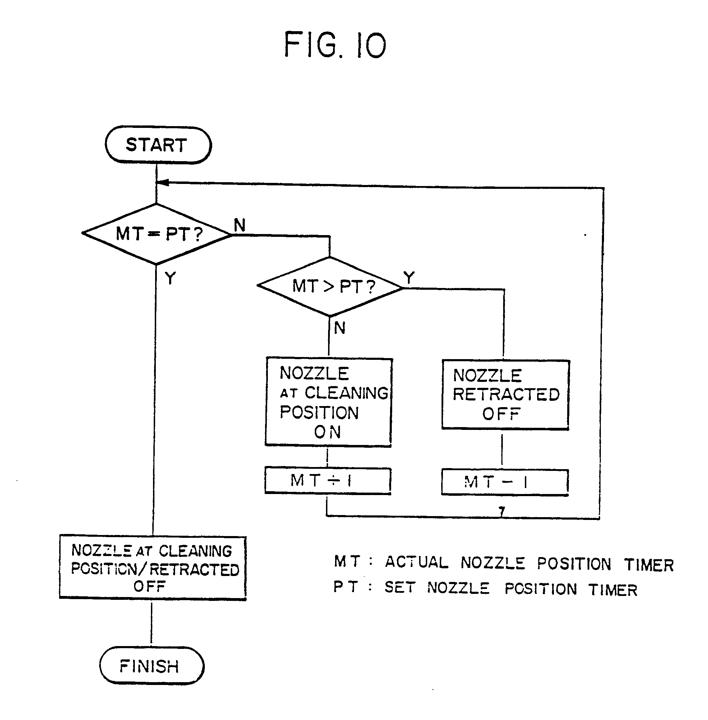

The flow chart of FIGURE 10 showing a system for controlling the movement of the nozzle body 4 includes an actual nozzle position timer MT and a set nozzle position timer PT. If the operating device 60 is actuated to turn on the power circuit for the motor 3, its output shaft 11 is rotated to unwind the leaf spring 12 from the drum 10 and move the nozzle body 4 forward to its cleaning position. The number of cycles of the frequency of the power source starts to be counted simultaneously with the turning on of the power circuit. When the nozzle body 4 has reached one of its cleaning positions, the power circuit is turned off to discontinue the rotation of the motor 3 and stop the nozzle body 4 at its designated anus cleaning position S-1 or functioning position as a bidet S-2, as shown in FIGURE 3.

When the nozzle body 4 is moved back to its retracted position S-4 in the cyclinder 2, the motor 3 is kept in operation for several more cycles even after the counted number of cycles indicating the actual position of the nozzle body 4 has coincided with a set value representing its retracted position S-4. This ensures the return of the nozzle body 4 to its completely retracted position S-4 and eliminates its inaccurate positioning which might otherwise result from the repeated operation of the motor 3. A similar control system is used for positioning the nozzle body 4 relative to its self-cleaning position S-3.

The motor 3 is a synchronous type and therefore, the nozzle body 4 may be accurately positioned if the frequency of the power source is counted. However, because incorrect positioning is possible, a pair of stop members 70 and 71 are provided in the cylinder 2 to ensure that the nozzle body 4 is stopped at its retracted position S-4 or at its functioning position as a bidet S-2.

If required, a semiconductor control device may be employed to enable the motor 3 to start when the voltage of the power source is zero. This arrangement eliminates any error in the counting of the number of cycles and improves the accuracy of nozzle positioning control.

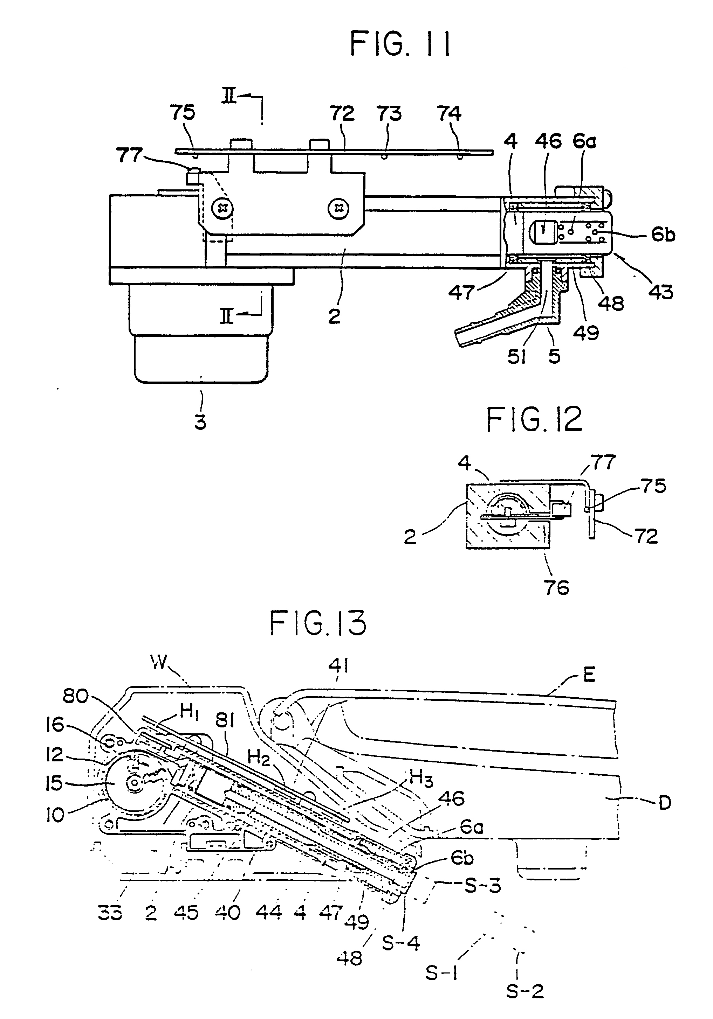

The use of the precision cylindrical drum 10 and the leaf spring 12 for converting the rotation of the motor 3 to the axial reciprocating movement of the nozzle body 4 enables the accurate conversion of the amount and angle of rotation of the output shaft 11 to the amount of movement of the nozzle body 4. This feature permits the use of a nozzle position sensor for the accurate positioning of the nozzle body 4 as shown in FIGURE 11.

Referring to FIGURE 11, a frame 72 is secured along one side of the cylinder 2 and has an inner surface on which lead switches 73, 74 and 75 are provided for detecting each position of the nozzle body 4 when it is in its anus cleaning position S-1, functioning position as a bidet S-2, and retracted position S-4, respectively. The cylinder 2 is formed on the one side thereof with a recess 76. A magnet 77 which faces one of the lead switches 73 to 75 depending on the postion of the nozzle body 4 is secured to the nozzle body 4 and exposed through the recess 76. When the magnet 77 has come to one of the lead switches 73 to 75 during the movement of the nozzle body 4, a corresponding signal is transmitted to the control system for the motor 3 to enable the detection of the nozzle position and its accurate positioning.

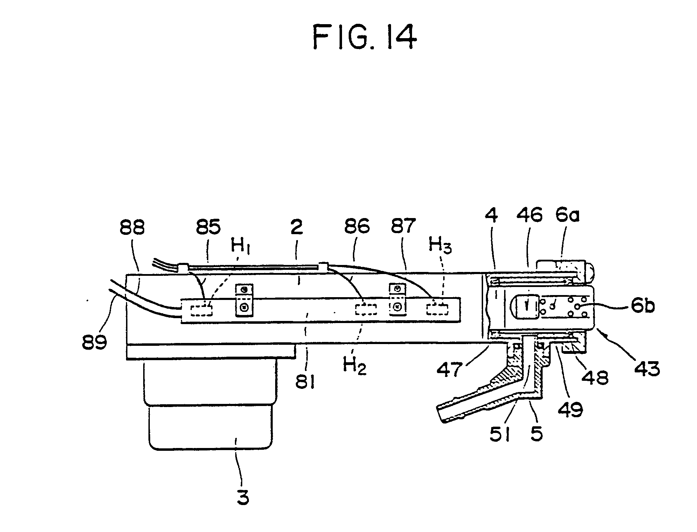

Another arrangement for positioning the nozzle body 4 is shown in FIGURES 13 and 14. It employs Hall ICs for detecting the position of the nozzle body 4 in motion instead of the lead switches as mentioned above. Such arrangement includes a magnet 80 mounted on the proximal end of the nozzle body 4 in such a way that the directions of both poles thereof may be perpendicular to the direction of axial movement of the nozzle body 4. Three Hall ICs $H_1$, $H_2$ and $H_3$ are provided for detecting the position of the nozzle body 4 in cooperation with the magnet 80. The Hall ICs $H_1$ to $H_3$ are mounted to the inner surface of the upper plate 81 of the cylinder 2 in parallel to the nozzle body 4 and in a way forming a perpendicular magnetic field with the magnet 80. The first to third Hall ICs HI to $H_1$to $H_3$ are so situated as to face the magnet 80 when the nozzle body 4 has reached its retracted position S-4, anus cleaning position S-1, and functioning position as a bidet S-2, respectively.

The Hall ICs are turned on or off by a magnetic field as is known in the art. The Hall ICs $H_1$ to $H_3$ are switched on or off when the magnet 80 creates a magnetic field of intensity above a certain level. They produce a low output voltage when switched on, and a high output voltage when switched off.

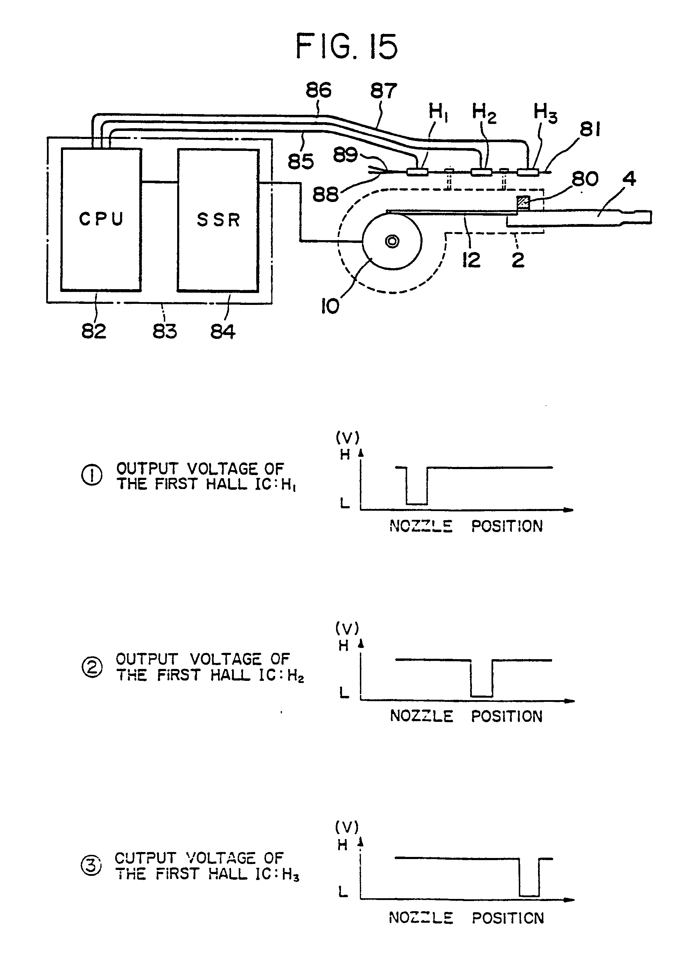

FIGURE 15 shows the principle of nozzle position control by the Hall ICs $H_1$ to $H_3$ and the magnet 80. The system of FIGURE 15 includes a central processing unit (CPU) 82 in a system 83 provided in the part cleaning device A for controlling all of the electrical components thereof, and a solid-state relay 84 for controlling the supply of power to the motor 3, a cleaning water heater, a heater for warming the toilet seat, a heater for the hot air fan H and the electromagnetic valve in the piping. The Hall ICs $H_1$ to $H_3$ are connected to the CPU 82 by position signal lines 85 to 87, respectively. Lead wires 88 and 89 are connected to the upper plate 81 of the cylinder 2 for supplying an electric current to the Hall ICs $H_1$ to $H_3$.

In order to move the nozzle body 4 forward from its retracted position S-4 as shown in FIGURE 13 to its anus cleaning position S-1, the cleaning start switch 53 on the control panel 52 is turned on and the motor 3 is started in response to a signal from the CPU 82 to release the leaf spring 12 from the drum 10, whereby the nozzle body 4 is moved forward. If the nozzle body 4 reaches its anus cleaning position S-1, the second Hall IC $H_2$ faces the magnet 80 and is turned on at a low output voltage as shown by graph (2) in FIGURE 15. Its output is fed back to the CPU 82 and the CPU 82 determines the Hall IC from which it has received the output signal. If it determines the signal as having been received from the second Hall IC $H_2$, it discontinues the supply of power to the motor 3. The nozzle body 4 is held at its anus cleaning position S-1 and the electromagnetic valve, or the like is opened to jet out cleaning water. If the anus has been cleaned, the stop switch 54 is operated. The CPU 82 transmits a signal to the motor 3 to rotate it in the opposite direction to retract the nozzle body 4 into the cylinder 2. When the magnet 80 has come to face the first Hall IC $H_1$, it produces a low output voltage as shown by graph (1) in FIGURE 15 and in response to the output of the Hall IC $H_1$, the CPU 82 stops the rotation of the motor 3, whereby the nozzle body 4 is held in its retracted position within the cylinder 2.

The start switch for a bidet 55 is turned on to move the nozzle body 4 to its functioning position as a bidet S-2. The magnet 80 cooperates with the third Hall IC $H_3$ to position the nozzle body 4 in its functioning position as a bidet S-2. The stop switch 54 may be depressed to retract the nozzle body 4 into the cylinder 2.

An additional Hall IC or ICs may be employed to provide an additional cleaning position or positions. The use of Hall ICs is convenient for enabling the detection of the nozzle body in a plurality of cleaning positions. Moreover, the Hall ICs, which do not have any contact, are easier to handle, assemble and mount than the lead switches.

According to this invention, the use of lead switches 10 or Hall ICs does not present any problem in the position control of the nozzle body 4, since the leaf spring 12 on the precision cylindrical surface of the drum 10 converts the rotation of the output shaft 11 of the motor 3 accurately to the axial movement of the nozzle body 4.

In addition to the various advantages of this invention as hereinabove set forth, it is also useful to remove cold water from the cleaning water supply pipe and wet the first and second packing members 47 and 48 prior to the use of the device for its primary purposes in order to reduce their frictional resistance to the movement of the nozzle body 4 and prolong the life of the packing members 47 and 48.

**Claims**

1. A method of controlling the position of a slidable body (4) which is axially movable by a device including an electric motor (3) having an output shaft (11) rotatable synchronously with the frequency of a power source, a cylindrical drum (10) secured to said output shaft (11), and a leaf spring (12) having one end secured to said drum (10) and extending thereabout, while the other end of said spring (12) is connected to said slidable body (4), characterized in that said method comprises counting the number of cycles of said frequency, determining the actual position of said slidable body (4) based on said counted number, comparing said actual position with a predetermined position, and transmitting the results of said comparison to a power circuit for said motor (3) to turn it on or off for positioning said slidable body (4) in said predetermined position.

2. A method of set forth in claim 1, wherein said motor (3) is placed in operation when said power circuit has a zero voltage.

3. A method of set forth in claim 1, wherein said slidable body is a nozzle (4) in a part cleaning device having a system (F, P) for supplying cleaning water and a system for heating it, said nozzle (4) being connected to said water supplying system (F, P) and movable between its retracted position and its cleaning position in which it jets out said heated cleaning water.

4. A method as set forth in claim 3, wherein said nozzle (4) is temporarily stopped in a position slightly projecting from said retracted position during its movement between said retracted and cleaning positions.

**Patentansprüche**

1. Verfahren zum Regeln der Position eines verschiebbaren Körpers (4), der axial bewegt werden kann durch eine Einrichtung mit einem Elektromotor (3) der eine Abtriebswelle (11) aufweist, die synchron mit der Frequenz einer Leistungsquelle drehbar ist, einer zylindrischen Trommel (10) die an der Abtriebswelle (11) befestigt ist, und einer Blattfeder (12) die mit einem Ende an der Trommel befestigt ist und sich um diese erstreckt, wobei das andere Ende der Feder (12) mit dem verschiebbaren Körper (4) verbunden ist, dadurch **gekennzeichnet**, daß das Verfahren umfaßt, Zählen der Anzahl der Perioden der Frequenz, Bestimmen der tatsächlichen Position des verschiebbaren Körpers (4) basierend auf der gezählten Anzahl, Vergleichen der tatsächlichen Position mit der vorbestimmten Position und Übertragen der Ergebnisse des Vergleichs zu einem Leistungs- bzw.

Stromkreis für den Motor (3), um ihn an- oder abzustellen für eine Positionierung des verschiebbaren Körpers (4) in die vorbestimmte Position.

2. Verfahren nach Anspruch 1, wobei der Motor (3) in Betrieb gesetzt wird, wenn der Stromkreis eine Nullspannung hat.

3. Verfahren nach Anspruch 1, wobei der verschiebbare Körper eine Düse (4) in einer Teil-Reinigungsvorrichtung ist mit einem System (F, P) zur Zuführung von Reinigungswasser und einem System zu seinem Aufheizen, wobei die Düse (4) mit dem Wasserversorgungssystem (F, P) verbunden ist und zwischen ihrer zurückgezogenen Stellung und ihrer Reinigungsstellung, in welcher sie das erhitzte Reinigungswasser ausspritzt, bewegbar ist.

4. Verfahren nach Anspruch 3, wobei die Düse (4) in einer Stellung, die etwas von der zurückgezogenen Stellung vorspringt, während ihrer Bewegung zwischen der zurückgezogenen Stellung und der Reinigungsstellung, zeitweilig gestoppt wird.

**Revendications**

1. Un procédé pour commander la position d'un corps coulissant (4) qui est mobile axialement au moyen d'un dispositif comprenant un moteur électrique (3) ayant un arbre de sortie 11 pouvant être entraîné en rotation de manière synchronisée avec la fréquence d'une source de courant, un tambour cylindrique (10) fixé au dit arbre de sortie (11), un ressort à lame (12) ayant l'une de ses extrémités fixées audit tambour (10) et s'étendant autour de celui-ci, tandis que l'autre extrémité du dit ressort (12) est reliée au dit corps coulissant (4), caractérisé en ce que ledit procédé comprend le comptage du nombre de cycles de ladite fréquence, la détermination de la position réelle du dit corps coulissant (4) basée sur ledit nombre décompté, la comparaison de ladite position réelle avec une position prédéterminée, et la transmission des résultats de ladite comparaison à un circuit de puissance du dit moteur (3) pour mettre celui-ci sur MARCHE ou sur ARRET pour positionner ledit corps coulissant (4) dans ladite position prédéterminée.

2. Un procédé tel que présenté dans la revendication 1, dans lequel ledit moteur (3) est mis en fonctionnement lorsque ledit circuit de puissance a une tension de zéro.

3. Un procédé tel que présenté dans la revendication 1, dans lequel ledit corps coulissant est une buse (4) dans un dispositif de nettoyage d'organes possédant un système (F, P) pour délivrer de l'eau de nettoyage et un système pour la chauffer, ladite buse (4) étant reliée au dit système d'alimentation en eau (F, P) et mobile entre sa position rétractée et sa position de nettoyage dans laquelle elle projette ladite eau chaude de nettoyage.

4. Un procédé tel que présenté dans la revendication 3, dans lequel ladite buse (4) est arrêtée de manière temporaire dans une position formant saillie légèrement à partir de ladite position rétractée lors de son déplacement entre les dites positions rétractée et de nettoyage.

# FIG. I

# FIG. 2

# FIG. 3

# FIG. 4

# FIG. 5

# FIG. 6

# FIG. 7

# FIG. 8

# FIG. 9

# FIG. 10

START

MT = PT?

N →

Y

MT > PT?

Y →

N

NOZZLE
AT CLEANING
POSITION
ON

NOZZLE
RETRACTED
OFF

MT + 1

MT - 1

7

NOZZLE AT CLEANING
POSITION/RETRACTED
OFF

FINISH

MT : ACTUAL NOZZLE POSITION TIMER
PT : SET NOZZLE POSITION TIMER

# FIG. 11

# FIG.12

# FIG.13

# FIG. 14

# FIG. 15

① OUTPUT VOLTAGE OF
THE FIRST HALL IC : H₁

② OUTPUT VOLTAGE OF
THE FIRST HALL IC : H₂

③ OUTPUT VOLTAGE OF
THE FIRST HALL IC : H₃

# FIG.16

# FIG.17